Europäisches Patentamt

European Patent Office

Office européen des brevets

(19)

(11) **EP 1 168 213 A1**

(12) **EUROPEAN PATENT APPLICATION**

(43) Date of publication:
**02.01.2002 Bulletin 2002/01**

(51) Int Cl.[7]: **G06F 17/60**

(21) Application number: **01107744.3**

(22) Date of filing: **02.04.2001**

| | |
|---|---|
| (84) Designated Contracting States: **AT BE CH CY DE DK ES FI FR GB GR IE IT LI LU MC NL PT SE TR** Designated Extension States: **AL LT LV MK RO SI** | (72) Inventor: **Torii, Hideyuki, Numerical Technologies K.K. Bunkyo-ku, Tokyo (JP)** |
| (30) Priority: **30.06.2000 JP 2000199275** | (74) Representative: **HOFFMANN - EITLE Patent- und Rechtsanwälte Arabellastrasse 4 81925 München (DE)** |
| (71) Applicant: **Numerical Technologies, Kabushiki Kaisha Tokyo (JP)** | |

(54) **Method for assets variation simulation in assets management and its system, and pseudo random number generation method used in the simulation**

(57)   A simulation method and system for simulation with excellent convergency for assets variation where variation elements of high dimensional number, at least over $10^2$, are correlational to each other, and a method for generating pseudo random numbers used in the simulation. Upon simulation of assets variation, pseudo random numbers are generated by a computer such that the pseudo random numbers have a period over the product of the dimensional number of assets variation elements and the number of times to perform simulation necessary to converge simulation result to predetermined error, and have a uniform distribution in the respective variation elements. The generated pseudo random numbers are adjusted by the computer such that at least first moment and second moment of the variation elements match input data. The adjusted pseudo random numbers are used for simulating assets variation by the computer as values of the assets variation elements.

**FIG. 1**

## Description

FIELD OF THE INVENTION

The present invention relates to simulation method and system for simulating variation in assets having variation elements of dimensional number at least over $10^2$, and a pseudo random number generation method for generating pseudo random numbers used in the simulation.

BACKGROUND OF THE INVENTION

In recent years, simulation of assets variation having variation elements of dimensional number at least over $10^2$ has been performed. For example, for VaR analysis for risk management and management resource distribution in financial institutions, simulation must be performed on a day-to-day basis in accordance with mutually-related variation elements of several ten-thousand to several hundred-thousand dimensional numbers.

Among simulation methods, the Monte Carlo method is a well-known method to obtain an approximate solution by imitatively creating a probability theoretical event by using random numbers. If the speed of convergence of simulation result is low in case of high-dimensional variation elements, an enormous amount of repeat calculation is required. By virtue of recent radical improvement in calculation speed by computers, this enormous amount of repeat calculation is becoming practically, however, it still has problems to overcome. The biggest problem is the convergence of solution, i. e., reduction of the number of times to perform simulation until the solution converges within a predetermined precision. As one of methods for improvement in the problem, the quasi-random number Monte Carlo method using a low discrepancy sequence (LDS) has been proposed. The LDS includes Faure sequence, Sobol sequence and the like. The U.S. Patent No. 5,940,810 discloses use of Sobol sequence, Holton sequence, Hammersley sequence and the like.

In case of monovariate or comparatively-low dimension (50 or higher in the above U.S. Patent), the use of LDS greatly improves the precision by reduced repeat calculation, however, if the number of variation elements increases with high dimensional number over $10^2$, the performance degrades. Further, as another problem, in a case where high-order variation elements are correlational to each other, i.e., in simulation of assets variation by VaR analysis or the like for risk management and management resource distribution in financial institutions, sufficient performance cannot be attained.

SUMMARY OF THE INVENTION

The present invention has been made to overcome the above conventional problems, and has its object to provide a simulation method and its system for realizing simulation with excellent convergency for assets variation having mutually-correlational variation elements of high dimensional number at least over $10^2$, and a pseudo random number generation method for generating pseudo random numbers used in the simulation.

According to the present invention, the foregoing object is attained by providing a simulation method for simulating assets variation having variation elements of dimensional number at least over $10^2$, comprising: a pseudo random number generation step of generating pseudo random numbers, having a period over a product of a dimensional number of assets variation elements and the number of times to perform simulation necessary for convergence of simulation results within a predetermined error, and having uniform distribution in respective said variation elements, by a computer; a pseudo random number adjustment step of adjusting said pseudo random numbers generated at said pseudo random number generation step such that at least first moment and second moment of said variation elements match input data, by the computer; and a simulation step of simulating variation of assets by the computer, with said pseudo random numbers adjusted at said pseudo random number adjustment step, as values of said assets variation elements.

Note that a mean value as the first moment of said variation elements represents an assets earning rate, a growth rate of macro economic element, an expectation growth rate of business results unique to an independent company or debtor, or the like, and a standard deviation value as the second moment of said variation elements represents a variability rate of assets, a variability rate of macro economic element, a variation factor unique to independent company or debtor, or the like. Further, at said pseudo random number adjustment step, said pseudo random numbers are adjusted such that at least a part of a third or higher moment matches the input data. Further, at said pseudo random number adjustment step, match between moments includes cancellation of moment. Further, at said pseudo random number adjustment step, adjustment of said pseudo random numbers includes antithetic variant method and/or quadratic resampling method. Further, said simulation is performed by the Monte Carlo method.

Further, the foregoing object is attained by providing a simulation system for simulating assets variation having variation elements of dimensional number at least over $10^2$, comprising: pseudo random number generation means, having a computer, for generating pseudo random numbers, having a period over a product of a dimensional number of assets variation elements and the number of times to perform simulation necessary for convergence of simulation results within a predetermined error, and having uniform distribution in respective said variation elements; pseudo random number adjustment mean, having a computer, for adjusting said pseudo random numbers generated by said pseudo random number generation means such that at least first moment and second moment of said variation elements match input data; and

simulation means, having a computer, for simulating variation of assets with said pseudo random numbers adjusted by said pseudo random number adjustment means, as values of said assets variation elements.

Note that said pseudo random number adjustment means controls said pseudo random numbers such that at least a part of higher moment equal to or higher than a third moment matches the input data. Further, said pseudo random number adjustment means performs moment matching including antithetic variant method and/or quadratic resampling method. Further, said simulation is performed by the Monte Carlo method.

Further, the foregoing object is attained by providing a computer-readable storage medium holding a program for simulating assets variation having variation elements of dimensional number at least over $10^2$, said program comprising: a first program module for generating pseudo random numbers, having a period over a product of a dimensional number of assets variation elements and the number of times to perform simulation necessary for convergence of simulation results within a predetermined error, and having uniform distribution in respective said variation elements, by a computer; a second program module for adjusting said pseudo random numbers generated by said first program module such that at least first moment and second moment of said variation elements match input data, by the computer; and a third program module for simulating variation of assets by the computer, with said pseudo random numbers adjusted by said second program module, as values of said assets variation elements.

Note that said second program module including a program for performing antithetic variant method and/or quadratic resampling method. Further, said simulation is performed by the Monte Carlo method.

Further, the foregoing object is attained by providing a pseudo random number generation method for generating pseudo random numbers used in the Monte Carlo method for simulating assets variation having variation elements of dimensional number at least over $10^2$, comprising: a pseudo random number generation step of generating pseudo random numbers, having a period over a product of a dimensional number of assets variation elements and the number of times to perform simulation necessary for convergence of simulation results within a predetermined error, and having uniform distribution in respective said variation elements, by a computer; and a pseudo random number adjustment step of adjusting said pseudo random numbers generated at said pseudo random number generation step such that at least first moment and second moment of said variation elements match input data, by the computer.

Note that at said pseudo random number adjustment step, said pseudo random numbers are adjusted such that at least a part of a third or higher moment matches the input data. Further, at said pseudo random number adjustment step, adjustment of said pseudo random numbers includes antithetic variant method and/or quadratic resampling method.

In accordance with the present invention, it is possible to provide a simulation method and its system for realizing simulation with excellent convergency for assets variation having mutually-correlated high-order variation elements at least over $10^2$, and a random number generation method used in the simulation.

Other features and advantages of the present invention will be apparent from the following description taken in conjunction with the accompanying drawings, in which like reference characters designate the same name or similar parts throughout the figures thereof.

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a block diagram showing the configuration of a simulation system according to an embodiment of the present invention;
Fig. 2 is a block diagram showing an example of hardware construction to realize the system according to the embodiment;
Fig. 3 is a flowchart showing an example of simulation processing in the system according to the embodiment;
Figs. 4 to 7 are tables showing the results of moment matching according to the embodiment;
Fig. 8 is a line graph showing an example of moment convergence in the conventional Monte Carlo method;
Fig. 9 is a line graph showing an example of moment convergence in the Monte Carlo method according to the embodiment; and
Fig. 10 is a stereoscopic 3-dimensional diagram showing an application example of the Monte Carlo method according to the present invention.

DETAILED DESCRIPTION OF THE PREFERRED EMBODIMENT

A preferred embodiments of the present invention will now be described in detail in accordance with the accompanying drawings.

<Outline of Simulation of Present Embodiment>

First, the developments to the invention of the simulation method of the present embodiment will be described.

For users of Monte Carlo simulation, the amount of calculation and simulation error have been a problem. The logical performance (=calculation error) of the crude Monte Carlo method is under the control of the following equation where n is the number of times to perform simulation. Even though the number of times to perform simulation is increased, the precision cannot be easily improved.

[Expression 1]

$$0\left(\frac{1}{\sqrt{n}}\right)$$

In the late 1980s when the calculation speed of computers was slow, a quasi Monte Carlo method using a low discrepancy sequence (LDS) was often used in the financial industry. In use of quasi Monte Carlo using numerical sequence having regularity = LDS, the logical performance is as follows where n is the number of times to perform simulation and d, the dimensional number:

[Expression 2]

$$0\left(\frac{(\log n)^d}{n}\right)$$

Thus, the method is greatly advantageous for the purpose of especially obtaining an expected value or variance in monovariate or low dimension. For example, in monovariate option pricing, the precision is greatly improved with a reduced repeat calculation, and this method was sufficient for practically used even by the late 80s low-speed computers. Accordingly, this simulation was popular among major financial players taking advantages of the MBS/ABS boom (most of the simulations are revised versions of Faure sequence or Sobol sequence). Even today's field of market VaR, where estimates put the number of practically effective dimensions (or main components) as comparatively small, the quasi random numbers are used in many cases. The above-mentioned U.S. Patent No. 5,940,810 is an example of the improvement.

However, as long as the LDS is used, the dimensional number d is effective in case of high dimension and the precision is seriously degraded. Further, in the VaR calculation, importance is placed on, not around the expected value, but the tail of distribution, while the behavior of the LDS at the tail is not fully clarified and the LDS is not easily handled. In description among random variables by modeling, the correlation between LDS series becomes an obstacle to meaningful result.

Accordingly, in the following present embodiment, pseudo random numbers having a longer period and uniform distribution are generated, and further, "adjusted pseudo random numbers" obtained by adjusting the moments of the pseudo random numbers to match the moments of input data (assets variation elements) are used so as to realize simulation with greatly improved error convergence.

<Configuration of Simulation System of Present Embodiment>

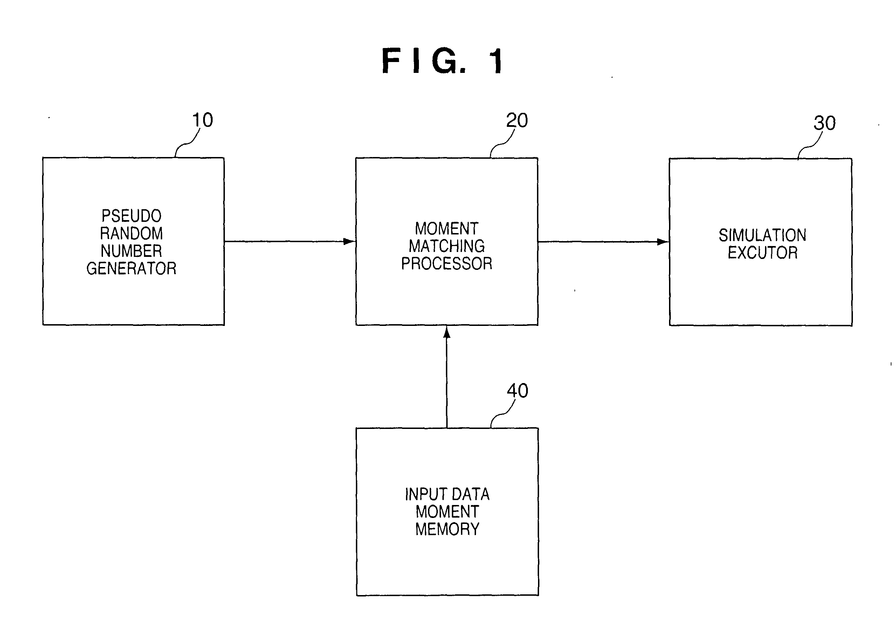

Fig. 1 is a block diagram showing the configuration of a simulation system according to the present embodiment of the present invention. Note that in the present embodiment, simulation based on the Monte Carlo method to simulate probability theoretical event will be described, however, the invention is applicable to other simulation methods using random numbers, and especially to simulation methods for convergence by repeat calculation.

(Pseudo Random Number Generator 10)

In Fig. 1, reference numeral 10 denotes a pseudo random number generator which preferably is a pseudo random number generation algorithm with a long period and high-dimensional uniform distribution, since there is a possibility that the random number period is run out with an increase in the dimension in the model of simulation object. Especially, the Monte Carlo simulation of the present embodiment consumes a large number of random numbers. For example, even in case of simple model, as typical credit risk model to assign one random number to one company, if simulation is performed 10,000 times for 50,000 companies, $5 \times 10^8$ random numbers are required. This number equals the random number period of C-language standard rand function (linear congruence method). In accordance with the empirical rule that a random number period as the cube of the number of necessary random numbers is required in order to perform the Monte Carlo simulation safely, most of the random number generation methods are inappropriate. In addition, as calculation of conditional probability distribution is necessary as in case of marginal risk amount, the performance of high-dimensional uniform distribution is important.

Accordingly, in the present embodiment, a pseudo random number Mersenne Twister (by Makoto Matsumoto and Takushi Kimura) is used. Mersenne Twister is a very high speed algorithm having a long period of $2^{19937}-1$ and high-dimensional uniform distribution performance.

(Moment Matching Processor 20)

Numeral 20 denotes a moment matching processor as a pseudo random number controller which controls the pseudo random numbers generated by the pseudo random number generator 10. The moment matching processor 20 controls the pseudo random numbers generated by the pseudo random number generator 10 to match moments of the pseudo random numbers to moments of input data, based on respective moment values from an input data moment memory 40, and outputs the adjusted pseudo random numbers to a simulation executor 30, thereby realizing convergence of simulation result error to or less than a predetermined value. The moment matching is especially effective in a case where the simulation executor 30 performs simulation on assets variation as a high-dimensional probability theoretical event by the Monte Carlo method.

(Example of Pseudo Random Number Control)

As a particular example of the processing performed by the moment matching processor 20, an antithetic variant method, a quadratic resampling method or the like is used.

In the antithetic variant method, when a normal random number is generated, its sign is inverted to generate another random number, thus two random numbers are used. In this method, as all the odd moments (mean, skewness etc.) can be turned zero, the convergency of simulation can be remarkably improved.

In the quadratic resampling method, first, a necessary number of random numbers are generated, then the statistic of the entire random sequence is calculated, and the difference between the calculated amount and the statistic of actual input data is corrected. According to the quadratic resampling, especially the second moment which cannot be eliminated by the above-described antithetic variant method can be controlled. That is, in the quadratic resampling method, calculation is made to shift respective values of the random numbers so as to eliminate the differences between the respective moments, e.g. the mean value of the first moment and the standard deviation of the second moment, and respective moments of input data.

In the present embodiment, the antithetic variant method and the quadratic resampling method are combined so that the mean (first moment), the standard deviation (second moment), the skewness (third moment) and higher-order moments can be matched with input data. Note that if the antithetic variant method and the quadratic resampling method are independently performed, the convergency can be improved.

Note that in the above description, the moments of pseudo random numbers are matched with those of input data, however, in a case where the input data is asset variation elements having a normal distribution, the moments of the pseudo random numbers can be cancelled, thereby the speed of simulation calculation processing can be increased.

Note that in the simulation of assets variation, the above mean (first moment) represents an assets earning rate, a growth rate of macro economic element or expectation growth rate of business results unique to independent company or debtor, or the like. The above standard deviation (second moment) represents a variability rate of assets, a variability rate of macro economic element, a variation factor unique to independent company or debtor, or the like.

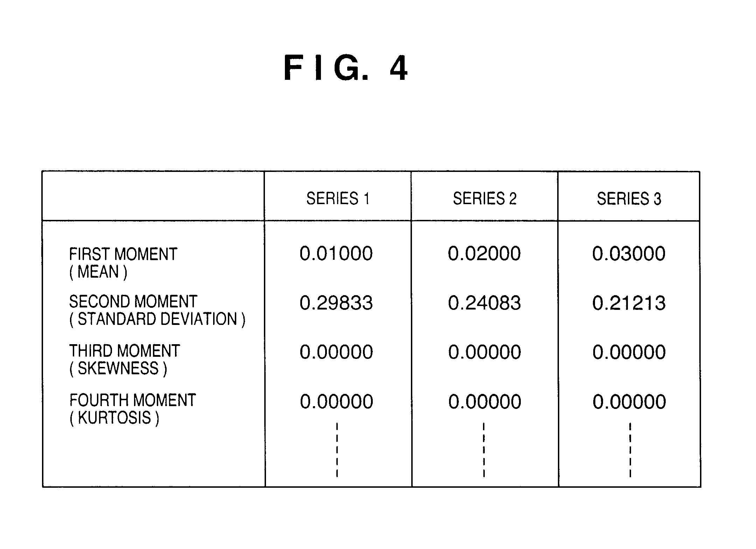

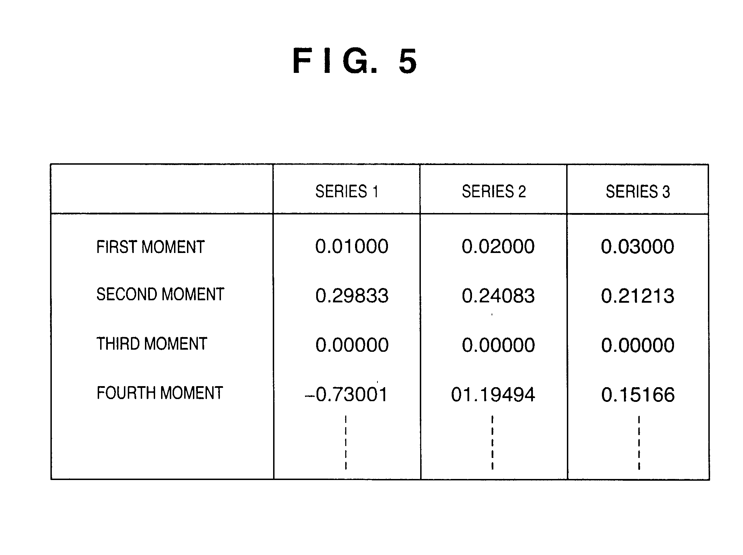

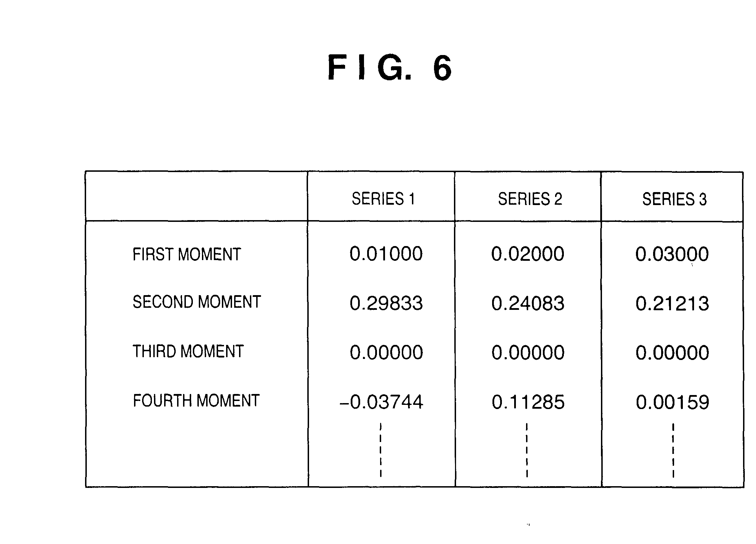

For example, in a case where input data has the respective moments in Fig. 4, if the antithetic variant method and the quadratic resampling method are combined, the statistics obtained from random numbers corresponding to multivariates are as shown in Fig. 5 in case of 100 times of trial computing, and as shown in Fig. 6 in case of 10,000 time of trial computing. The respective moments of the multivariate random numbers, especially the first to third moments, are almost equal to the moments of the input data. This means the errors of the simulation results can be radically converged by execution of simulation a small number of times.

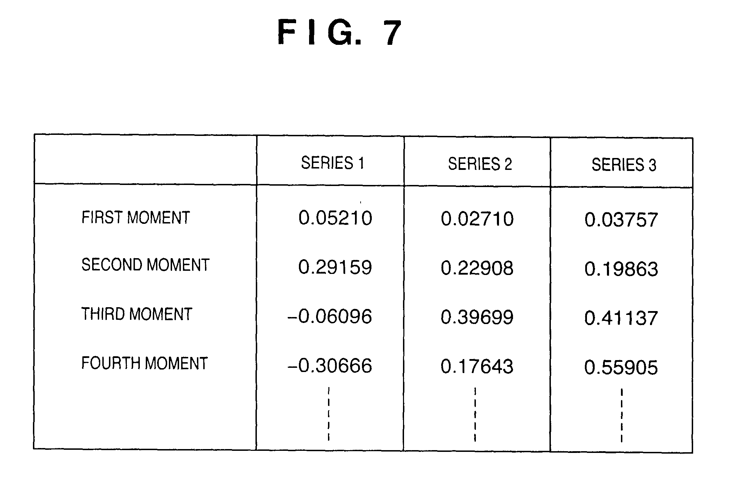

On the other hand, if the moment matching processing is not performed, the statistics obtained from 100 times of trial computing are as shown in Fig. 7, where the moments are greatly different from those of the input data. As the convergence of the errors of the simulation results is not realized, the number of times to perform simulation increases as the number of multivariates increases, thus the simulation cannot be practically used without difficulty.

(Simulation Executor 30)

Generally, simulation in VaR analysis for risk management and management resource distribution in financial institutions is made with multivariates (variation elements) and a high-dimensional matrix due to correlation among variates. The simulation executor 30 obtains a solution of the high-dimensional matrix. For example, in the Monte Carlo method, simulation is performed with the adjusted pseudo random numbers outputted from the moment matching processor 20 as variates, and an approximate solution is obtained. Note that as a particular example of the simulation itself is not the subject matter of the present invention, the example will not be described in detail.

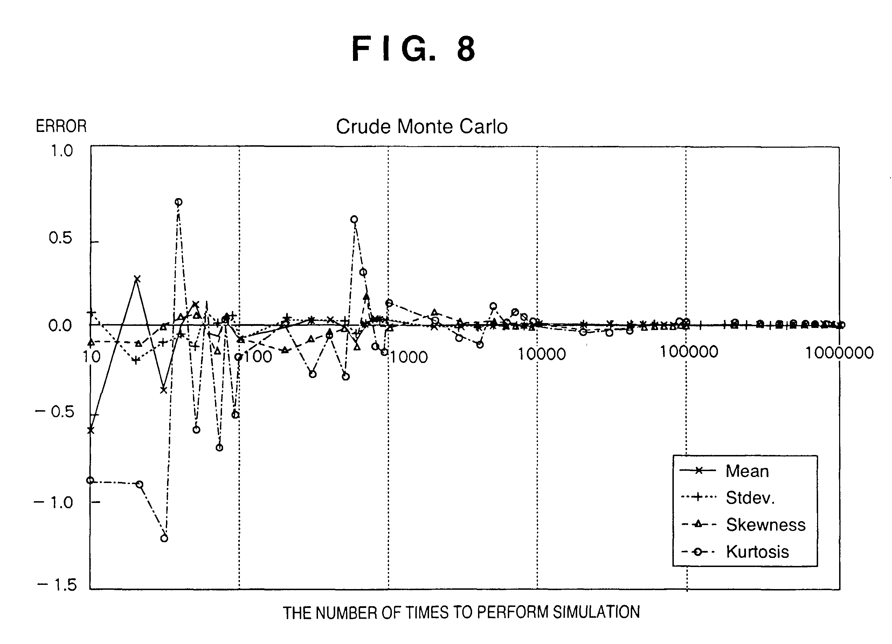

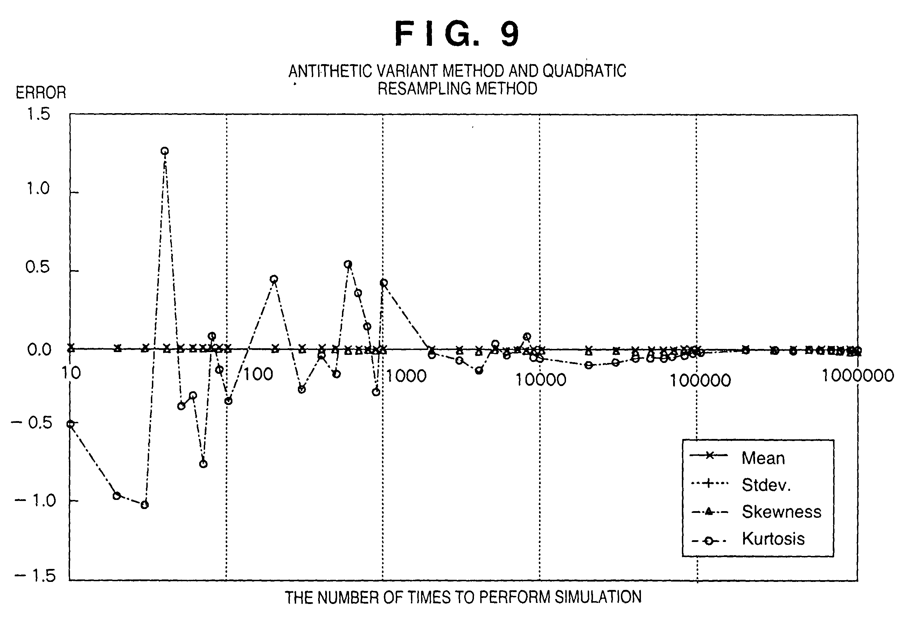

Figs. 8 and 9 are line graphs showing changes of the respective first to fourth moments when the number of times to perform simulation is changed from 10 to 1,000,000, as the results of moment matching in case of the crude Monte Carlo method (Fig. 8) and in case of the Monte Carlo method with the antithetic variant method and the quadratic resampling method (Fig. 9). As it is apparent from these figures, the effect of the convergence in the Monte Carlo simulation using the moment-matching processed pseudo random numbers is dramatic especially from the first to third moments.

(Input Data Moment Memory 40)

The input data moment memory 40 is used for storing input data moment values. The input data moment values for simulation executed in the present system are provided from the memory 40 to the moment matching processor 20. Preferably, the input data moment values are from the first to higher order values, however, actually at least first and second moment values, or normally first to fourth moment values may be provided. These values are preferably calculated in advance from accumulation of input data.

Note that if it can be assumed that the input data has a distribution appropriately similar to a normal distribution, the first and second moments are uniquely determined, and the third and higher moments are zero. Accordingly, in this case, the moment matching processor 20 performs cancellation on the moments of the pseudo random numbers.

<Hardware Construction to Realize System of Present Embodiment>

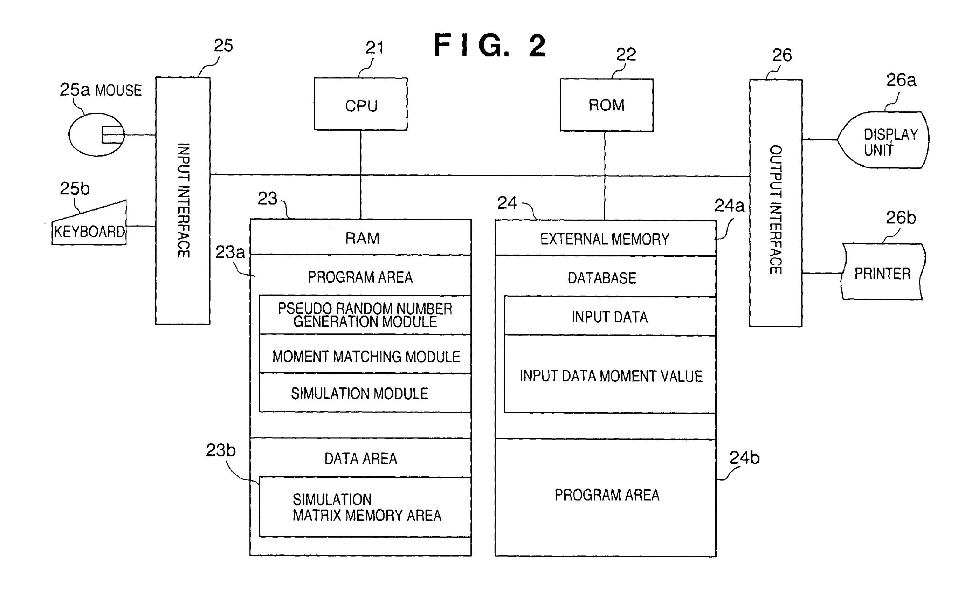

Fig. 2 is a block diagram showing an example of hardware construction to realize the system according to the present embodiment.

In Fig. 2, numeral 21 denotes a CPU for calculation and control; 22, a ROM for storing a fixed program and fixed parameters executed by the CPU 21; and 23, a RAM used for temporarily storing the processing program executed by the CPU 21 and data. In the present embodiment, the RAM 23 has a program area 23a for storing a pseudo random number generation program module, a moment matching program module, and a simulation program module, and a data area 23b having a simulation matrix memory area and the like. Note that the program may be read from an external memory 24 such as a floppy disk or a CD-ROM into the RAM 23 and executed.

The external memory 24 is a magnetic disk such as a hard disk or a floppy disk, an optical disk such as a CD-ROM or a CD-RW or DVD, a memory card, or the like. The external memory 24 is used for storing respective data used in simulations, especially input data and input data moment values in the present embodiment, as a database 24a. Further, the program downloaded to the RAM 23 and executed is stored in a program area 24b. Numeral 25 denotes an input interface for interfacing inputs from a mouse 25a as a pointing device and a keyboard 25b for data input, to the system.

Numeral 26 denotes an output interface for interfacing outputs from the system to a display unit 26a for data display or to a printer 26b for print output.

Note that in the example of Fig. 2, the system of the present embodiment is applied to a general personal computer, however, in the simulation executed by the present system, repeat calculation is made at least several thousand times in realtime, therefore, it is desirable to construct a specialized computer system. For example, plural computers may be connected in parallel for parallel processing, or one computer may be provided with plural CPU's for parallel processing.

<Example of Software Processing in System of Present Embodiment>

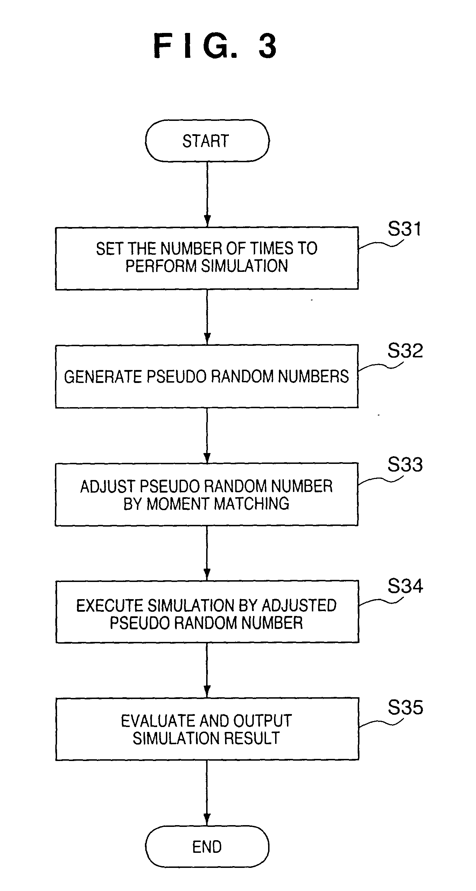

Fig. 3 is a flowchart showing an example of simulation processing in the system according to the present embodiment.

First, at step S31, the number of times to perform simulation by the present system is set. The number of times to perform simulation is a necessary number to converge the simulation results to a predetermined error. Generally, simulation must be performed 10,000 times or more. At step S32, pseudo random numbers, having a length based on the set number of times to perform simulation and the dimension of assets variation elements, are generated. Next, at step S33, moment matching processing is performed on the generated pseudo random numbers. In this embodiment, the antithetic variant method and the quadratic resampling method, for example, are performed. The respective first to third moments are matched with moments of input data. At step S34, simulation is executed by using the pseudo random numbers adjusted by the moment matching as values of assets variation elements. At step S35, the assets variation is evaluated from the simulation result, then assets risk, for example, is further calculated, and outputted to the display unit 26a or the printer 26b. Otherwise, the evaluation may be transmitted to a user by communication.

Note that as described in the construction of the above system, it is preferable not to serially perform the steps but actually divide the modules for parallel processing by plural CPU's or plural computers.

<Example of Simulation by Adjusted Pseudo Random Numbers in Present Embodiment>

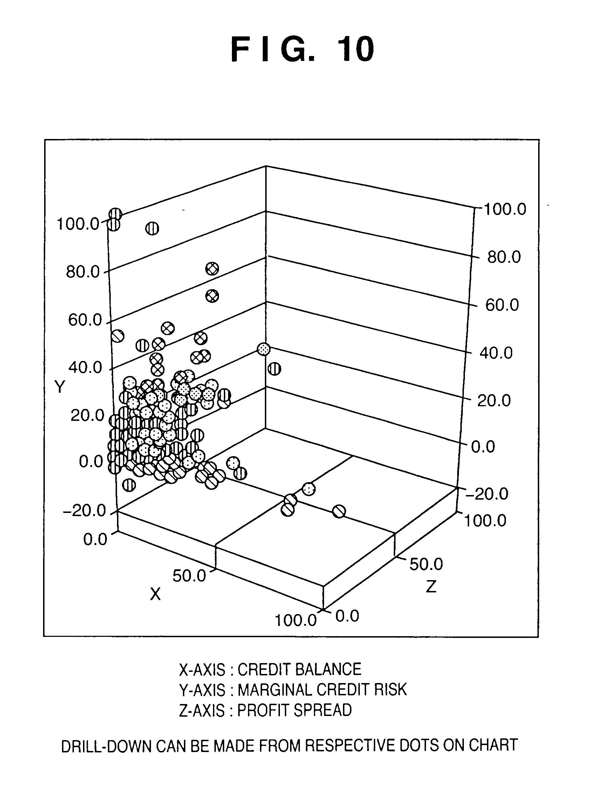

Fig. 10 shows the result of simulation for financial risk management by the system according to the present embodiment.

Fig. 10 is a stereoscopic 3-dimensional diagram showing the result of simulation where the X-axis represents a credit balance, the Y-axis, a marginal credit risk, and Z-axis, profit spread. According to the above system, process time for convergence within desired error, that has conventionally been over 10 hours, is 2 hours.

Note that the methods of the generation of pseudo random numbers, moment matching and simulation merely show an example and similar advantages can be obtained by other methods within the scope of the present invention.

As many apparently widely different embodiments of the present invention can be made without departing from the spirit and scope thereof, it is to be understood that the invention is not limited to the specific embodiments thereof except as defined in the appended claims.

**Claims**

1. A simulation method for simulating assets variation having variation elements of dimensional number at least over $10^2$, comprising:

   a pseudo random number generation step of generating pseudo random numbers, having a period over a product of a dimensional number of assets variation elements and the number of times to perform simulation necessary for convergence of simulation results within a predetermined error, and having uniform distribution in respective said variation elements, by a computer;
   a pseudo random number adjustment step of adjusting said pseudo random numbers generated at said pseudo random number generation step such that at least first moment and second moment of said variation elements match input data, by the computer; and
   a simulation step of simulating variation of assets, by the computer, with said pseudo random numbers adjusted at said pseudo random number adjustment step, as values of said assets variation elements.

2. The simulation method according to claim 1, wherein a mean value, as the first moment of said variation elements, represents an assets earning rate, a growth rate of macro economic element, an expectation growth rate of business results unique to an independent company or debtor, or the like,
   and wherein a standard deviation value, as the second moment of said variation elements, represents a variability rate of assets, a variability rate of macro economic element, a variation factor unique to independent company or debtor, or the like.

3. The simulation method according to claim 1, wherein at said pseudo random number adjustment step, said pseudo random numbers are adjusted such that at least a part of a third or higher moment matches the input data.

4. The simulation method according to claim 1 or 3, wherein at said pseudo random number adjustment step, match between moments includes cancellation of moment.

5. The simulation method according to claim 1, wherein at said pseudo random number adjustment step, adjustment of said pseudo random numbers includes antithetic variant method and/or quadratic resampling method.

6. The simulation method according to any one of claims 1 to 5, wherein said simulation is performed by the Monte Carlo method.

7. A simulation system for simulating assets variation having variation elements of dimensional number at least over $10^2$, comprising:

   pseudo random number generation means, using a computer, for generating pseudo random numbers, having a period over a product of a dimensional number of assets variation elements and the number of times to perform simulation necessary for convergence of simulation results within a predetermined error, and using uniform distribution in respective said variation elements;
   pseudo random number adjustment mean, using a computer, for adjusting said pseudo random numbers generated by said pseudo random number generation means such that at least first moment and second moment of said variation elements match input data; and
   simulation means, using a computer, for simulating variation of assets with said pseudo random numbers adjusted by said pseudo random number adjustment means, as values of said assets variation elements.

8. The simulation system according to claim 7, wherein said pseudo random number adjustment means controls said pseudo random numbers such that at least a part of higher moment equal to or higher than a third moment matches the input data.

9. The simulation system according to claim 7 or 8, wherein said pseudo random number adjustment means performs moment matching including antithetic variant method and/or quadratic resampling method.

10. The simulation method according to any one of claims 7 to 9, wherein said simulation is performed by the Monte Carlo method.

**11.** A computer-readable storage medium holding a program for simulating assets variation having variation elements of dimensional number at least over $10^2$, said program comprising:

a first program module for generating pseudo random numbers, having a period over a product of a dimensional number of assets variation elements and the number of times to perform simulation necessary for convergence of simulation results within a predetermined error, and having uniform distribution in respective said variation elements, by a computer;

a second program module for adjusting said pseudo random numbers generated by said first program module such that at least first moment and second moment of said variation elements match input data, by the computer; and

a third program module for simulating variation of assets by the computer, with said pseudo random numbers adjusted by said second program module, as values of said assets variation elements.

**12.** The storage medium according to claim 11, wherein said second program module including a program for performing antithetic variant method and/or quadratic resampling method.

**13.** The storage medium according to claim 11 or 12, wherein said simulation is performed by the Monte Carlo method.

**14.** A pseudo random number generation method for generating pseudo random numbers used in the Monte Carlo method for simulating assets variation having variation elements of dimensional number at least over $10^2$, comprising:

a pseudo random number generation step of generating pseudo random numbers, having a period over a product of a dimensional number of assets variation elements and the number of times to perform simulation necessary for convergence of simulation results within a predetermined error, and having uniform distribution in respective said variation elements, by a computer; and

a pseudo random number adjustment step of adjusting said pseudo random numbers generated at said pseudo random number generation step such that at least first moment and second moment of said variation elements match input data, by the computer.

**15.** The pseudo random number generation method according to claim 14, wherein at said pseudo random number adjustment step, said pseudo random numbers are adjusted such that at least a part of a third or higher moment matches the input data.

**16.** The pseudo random number generation method according to claim 14, wherein at said pseudo random number adjustment step, adjustment of said pseudo random numbers includes antithetic variant method and/or quadratic resampling method.

# F I G. 1

EP 1 168 213 A1

EP 1 168 213 A1

# F I G. 2

21 CPU
22 ROM
26 OUTPUT INTERFACE
26a DISPLAY UNIT
26b PRINTER
25 INPUT INTERFACE
25a MOUSE
25b KEYBOARD

23 RAM
23a PROGRAM AREA
- PSEUDO RANDOM NUMBER GENERATION MODULE
- MOMENT MATCHING MODULE
- SIMULATION MODULE
23b DATA AREA
- SIMULATION MATRIX MEMORY AREA

24 EXTERNAL MEMORY
24a DATABASE
- INPUT DATA
- INPUT DATA MOMENT VALUE
24b PROGRAM AREA

10

# F I G. 3

```
        ( START )
            |
            v
+---------------------------+   S31
| SET THE NUMBER OF TIMES TO|
|    PERFORM SIMULATION      |
+---------------------------+
            |
            v
+---------------------------+   S32
| GENERATE PSEUDO RANDOM NUMBERS |
+---------------------------+
            |
            v
+---------------------------+   S33
|  ADJUST PSEUDO RANDOM NUMBER |
|    BY MOMENT MATCHING       |
+---------------------------+
            |
            v
+---------------------------+   S34
| EXECUTE SIMULATION BY ADJUSTED |
|    PSEUDO RANDOM NUMBER      |
+---------------------------+
            |
            v
+---------------------------+   S35
|   EVALUATE AND OUTPUT       |
|    SIMULATION RESULT        |
+---------------------------+
            |
            v
        (  END  )
```

# FIG. 4

|  | SERIES 1 | SERIES 2 | SERIES 3 |
|---|---|---|---|
| FIRST MOMENT<br>( MEAN ) | 0.01000 | 0.02000 | 0.03000 |
| SECOND MOMENT<br>( STANDARD DEVIATION ) | 0.29833 | 0.24083 | 0.21213 |
| THIRD MOMENT<br>( SKEWNESS ) | 0.00000 | 0.00000 | 0.00000 |
| FOURTH MOMENT<br>( KURTOSIS ) | 0.00000 | 0.00000 | 0.00000 |

EP 1 168 213 A1

# F I G. 5

| | SERIES 1 | SERIES 2 | SERIES 3 |
|---|---|---|---|
| FIRST MOMENT | 0.01000 | 0.02000 | 0.03000 |
| SECOND MOMENT | 0.29833 | 0.24083 | 0.21213 |
| THIRD MOMENT | 0.00000 | 0.00000 | 0.00000 |
| FOURTH MOMENT | −0.73001 | 01.19494 | 0.15166 |

EP 1 168 213 A1

# F I G. 6

| | SERIES 1 | SERIES 2 | SERIES 3 |
|---|---|---|---|
| FIRST MOMENT | 0.01000 | 0.02000 | 0.03000 |
| SECOND MOMENT | 0.29833 | 0.24083 | 0.21213 |
| THIRD MOMENT | 0.00000 | 0.00000 | 0.00000 |
| FOURTH MOMENT | −0.03744 | 0.11285 | 0.00159 |

EP 1 168 213 A1

# F I G. 7

|                | SERIES 1 | SERIES 2 | SERIES 3 |
|----------------|----------|----------|----------|
| FIRST MOMENT   | 0.05210  | 0.02710  | 0.03757  |
| SECOND MOMENT  | 0.29159  | 0.22908  | 0.19863  |
| THIRD MOMENT   | −0.06096 | 0.39699  | 0.41137  |
| FOURTH MOMENT  | −0.30666 | 0.17643  | 0.55905  |

EP 1 168 213 A1

# FIG. 8

ERROR           Crude Monte Carlo

THE NUMBER OF TIMES TO PERFORM SIMULATION

Legend:
- —×— Mean
- ···+··· Stdev.
- –△– Skewness
- –○–· Kurtosis

EP 1 168 213 A1

# FIG. 9

EP 1 168 213 A1

ANTITHETIC VARIANT METHOD AND QUADRATIC
RESAMPLING METHOD

THE NUMBER OF TIMES TO PERFORM SIMULATION

# F I G. 10

X-AXIS : CREDIT BALANCE
Y-AXIS : MARGINAL CREDIT RISK
Z-AXIS : PROFIT SPREAD

DRILL-DOWN CAN BE MADE FROM RESPECTIVE DOTS ON CHART

**European Patent Office**

**DECLARATION**

which under Rule 45 of the European Patent Convention shall be considered, for the purposes of subsequent proceedings, as the European search report

**Application Number**

EP 01 10 7744

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| | G06F17/60 |

Reason:

The subject-matter claimed in claims 1-6 and 14-16 falls under the provisions of Article 52(2) and (3) EPC, such subject-matter relating to a method of doing business as such and a mathematical metod.

Claims 7-13 relate to a conventional system and computer readable storage medium for performing the business method and mathematical method of claims 1-6 and 14-16. Although these claims do not literally belong to the method category, they essentially claim protection for the same commercial effect as the method claims. The Search Division considers that searching this subject-matter would serve no useful purpose. It is not at present apparent how the subject-matter of the present claims may be considered defensible in any subsequent examination phase in front of the EPO with regard to the provisions of Articles 54 and 56 EPC (novelty, inventive step; see also Guidelines B-VII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 15 May 2001 | Suendermann, R |

EPO FORM 1504 (P04C37)